(19) Europäisches Patentamt / European Patent Office / Office européen des brevets

(11) **EP 2 182 623 B1**

(12) **FASCICULE DE BREVET EUROPEEN**

(45) Date de publication et mention
de la délivrance du brevet:
**19.07.2017 Bulletin 2017/29**

(51) Int Cl.:
***H02M 1/42*** *(2007.01)*  ***H02J 1/10*** *(2006.01)*

(21) Numéro de dépôt: **09306023.4**

(22) Date de dépôt: **28.10.2009**

(54) **Dispositif de conversion d'énergie électrique d'une alimentation alternative triphasée vers une sortie continue.**

Gleichrichter mit dreiphasigem Eingang

AC/DC converter with three phase input

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **29.10.2008 FR 0857359**

(43) Date de publication de la demande:
**05.05.2010 Bulletin 2010/18**

(73) Titulaire: **GE Energy Power Conversion Technology Limited**
**Rugby**
**Warwickshire CV21 1BU (GB)**

(72) Inventeur: **Permuy, Alfred**
**92500 Rueil-Malmaison (FR)**

(74) Mandataire: **Serjeants LLP**
**Dock**
**75 Exploration Drive**
**Leicester, LE4 5NU (GB)**

(56) Documents cités:
**EP-A- 0 595 091    EP-A- 1 553 689**
**US-A- 5 430 639**

- BAUMANN M ET AL: "New wide input voltage range three-phase unity power factor rectifier formed by integration of a three-switch buck-derived front-end and a DC/DC boost converter output stage" TELECOMMUNICATIONS ENERGY CONFERENCE, 2000. INTELEC. TWENTY-SECOND INT ERNATIONAL SEPTEMBER 10-14, 2000, PISCATAWAY, NJ, USA,IEEE, 10 septembre 2000 (2000-09-10), pages 461-470, XP010523227 ISBN: 978-0-7803-6407-3
- SKUDELNY, HANS-CHRISTOPH: "Stromrichtertechnik, Vorlesung an der RWTH Aachen" 1994, VERLAG DER AUGUSTINUS BUCHHANDLUNG , AACHEN , XP002536540 ISBN: 3-86073-189-0 * page 100 - page 102 *

**Description**

La présente invention concerne un dispositif de conversion d'énergie électrique d'une alimentation alternative triphasée vers une sortie continue, ayant une fonction de correction de facteur de puissance, comprenant une première, une deuxième et une troisième phase d'entrée.

Les dispositifs PFC (circuits de correction de facteur de puissance) triphasés actuels utilisent un onduleur triphasé complexe.

La présente invention vise à palier cet inconvénient en fournissant un dispositif de conversion n'utilisant que des circuits simples du type Boost.

A cet effet, l'invention a tout d'abord pour objet un dispositif de conversion d'énergie électrique d'une alimentation alternative triphasée vers une sortie continue, comprenant une première, une deuxième et une troisième phase d'entrée ; caractérisé en ce que

- la première phase est reliée, par l'intermédiaire d'une première diode connectée en sens direct, à l'entrée d'un premier circuit de type Boost et, par l'intermédiaire d'une deuxième diode connectée en sens direct, à l'entrée d'un deuxième circuit de type Boost ;
- la deuxième phase est reliée, par l'intermédiaire d'une troisième diode connectée en sens direct, à l'entrée du premier circuit de type Boost et, par l'intermédiaire d'une quatrième diode connectée en sens direct, à l'entrée d'un troisième circuit de type Boost ;
- la troisième phase est reliée, par l'intermédiaire d'une cinquième diode connectée en sens direct, à l'entrée du deuxième circuit de type Boost et, par l'intermédiaire d'une sixième diode connectée en sens direct, à l'entrée du troisième circuit de type Boost ;

les sorties desdits premier, deuxième et troisième circuits de type Boost étant connectées à une borne d'un premier condensateur de sortie ; en ce que

- la première phase est reliée, par l'intermédiaire d'une septième diode connectée en sens inverse, à l'entrée d'un quatrième circuit de type Boost et, par l'intermédiaire d'une huitième diode connectée en sens inverse, à l'entrée d'un cinquième circuit de type Boost ;
- la deuxième phase est reliée, par l'intermédiaire d'une neuvième diode connectée en sens inverse, à l'entrée d'un sixième circuit de type Boost et, par l'intermédiaire d'une dixième diode connectée en sens inverse, à l'entrée du cinquième circuit de type Boost ;
- la troisième phase est reliée, par l'intermédiaire d'une onzième diode connectée en sens inverse, à l'entrée du sixième circuit de type Boost et, par l'intermédiaire d'une douzième diode connectée en sens inverse, à l'entrée du quatrième circuit de type Boost ;

les sorties desdits quatrième, cinquième et sixième circuits de type Boost étant connectées à une borne d'un deuxième condensateur de sortie ;
et en ce que
les autres bornes desdits premier et deuxième condensateurs de sortie sont reliées entre elles.

Un point neutre d'entrée peut être connecté à la borne commune aux deux condensateurs de sortie.

Dans un mode de réalisation particulier, au moins un desdits circuits de type Boost comporte un interrupteur commandé par un circuit de commande, un premier condensateur de sortie et une première inductance série d'entrée, une diode étant connectée en série avec ladite première inductance entre l'interrupteur commandé et le condensateur de sortie.

Ledit interrupteur commandé peut être un transistor.

Ledit interrupteur commandé peut également être formé d'un thyristor et d'une diode antiparallèle, des moyens étant prévus pour garantir l'annulation du courant dans le thyristor pendant un temps suffisant à l'ouverture de ce dernier.

Plus particulièrement, lesdits moyens d'annulation du courant peuvent comprendre un circuit résonnant comportant une deuxième inductance série connectée entre ladite première inductance série et la diode série, et un deuxième condensateur connecté à la borne commune à ladite deuxième inductance série et à la diode série.

Ladite deuxième inductance série peut en particulier être une inductance variable.

L'invention a également pour objet un équipement électrique de puissance, comprenant au moins un dispositif de conversion tel que décrit ci-dessus.

On décrira maintenant, à titre d'exemple non limitatif, un mode de réalisation particulier de l'invention, en référence aux dessins schématiques annexés dans lesquels :

- la figure 1 est un schéma d'un dispositif de conversion d'énergie électrique selon l'invention ;
- la figure 2 est un schéma électrique d'un circuit Boost conventionnel susceptible d'être utilisé dans le dispositif de la figure 1 ;
- la figure 3 est un schéma par blocs du circuit de commande de l'interrupteur de la figure 2 ;
- la figure 4 est un schéma électrique d'un circuit Boost à thyristor ;
- la figure 5 illustre le fonctionnement du circuit Boost de la figure 4 ;
- la figure 6 représente l'évolution dans le temps de signaux relevés sur le dispositif de la figure 1.

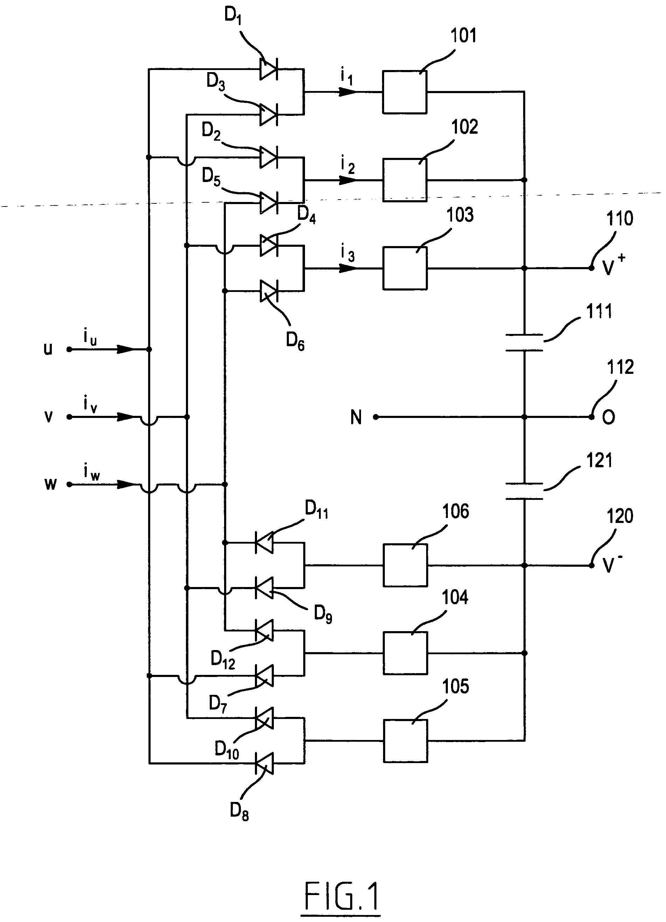

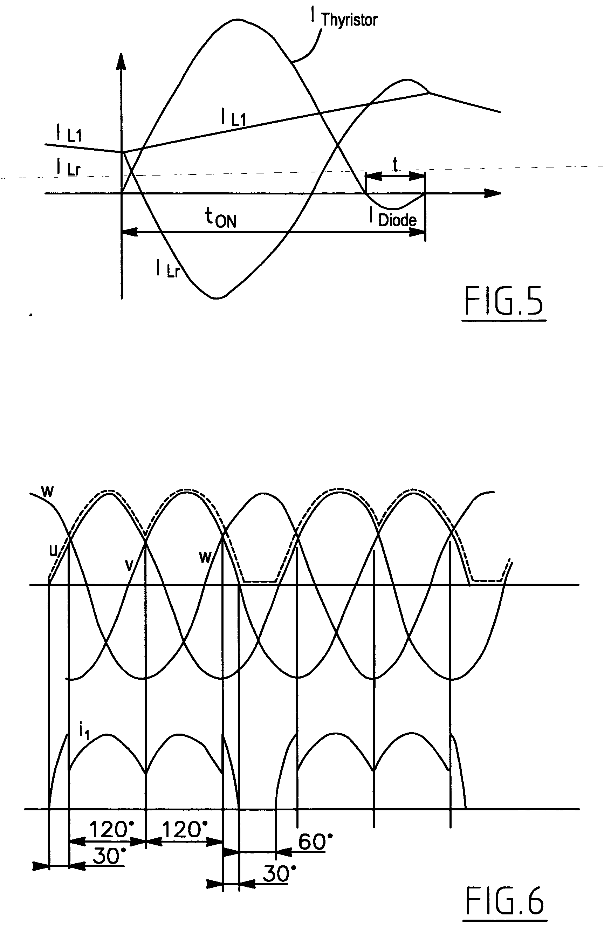

On voit à la figure 1 une alimentation triphasée fournissant trois tensions sinusoïdales $u$, $v$ et $w$ déphasées de 120° comme représenté à la figure 6, et un neutre N. Les courants dans chaque phase sont respectivement $i_u$, $i_v$ et $i_w$.

Les tensions $u$ et $v$ sont reliées à l'entrée d'un premier circuit Boost 101 par l'intermédiaire de deux diodes $D_1$ et $D_3$ respectivement, connectées en sens direct ; les tensions $u$ et $w$ sont reliées à l'entrée d'un deuxième circuit Boost 102 par l'intermédiaire de deux diodes $D_2$ et $D_5$ respectivement, connectées en sens direct ; et les tensions $v$ et $w$ sont reliées à l'entrée d'un troisième circuit Boost 103 par l'intermédiaire de deux diodes $D_4$ et $D_6$ respectivement, connectées en sens direct.

De façon similaire, les tensions $u$ et $w$ sont reliées à l'entrée d'un quatrième circuit Boost 104 par l'intermédiaire de deux diodes $D_7$ et $D_{12}$ respectivement, connectées en sens inverse ; les tensions $u$ et $v$ sont reliées à l'entrée d'un cinquième circuit Boost 105 par l'intermédiaire de deux diodes $D_8$ et $D_{10}$ respectivement, connectées en sens inverse ; et les tensions $v$ et $w$ sont reliées à l'entrée d'un sixième circuit Boost 106 par l'intermédiaire de deux diodes $D_9$ et $D_{11}$ respectivement, connectées en sens inverse.

Les sorties des circuits 101, 102 et 103 sont reliées à une borne 110 d'un condensateur 111 dont l'autre borne 112 est reliée au neutre N de l'alimentation triphasée. La borne 110 est à la tension continue $V^+$ par rapport au 0 de la borne 112.

De même, les sorties des circuits 104, 105 et 106 sont reliées à une borne 120 d'un condensateur 121 dont l'autre borne est reliée au neutre N de l'alimentation triphasée, et donc à la borne 112 du condensateur 111. La borne 120 est à la tension continue $V^-$ par rapport au 0 de la borne 112.

$i_u$, $i_v$ et $i_w$ étant les courants d'entrée, on veut qu'à chaque instant

$$i_u = k.u$$

$$-i_v = k.v$$

$$i_w = k.w$$

de par la fonction même du circuit, puisque la tension et l'intensité d'entrée de l'alimentation doivent être en phase ou, en d'autres termes, que la tension et l'intensité doivent être proportionnelles à chaque instant.

Le bloc constitué par le circuit 101 et les diodes $D_1$ et $D_3$ réalise la fonction suivante :

- si *max (u, v, w)=u* alors $i_1 = (K^+.u)/2$
- si *max (u, v, w)=v* alors $i_1 = (K^+.v)/2$
- si *max (u, v, w)=w* alors

  ○ si *max (u, v, 0)=u* alors $i_1 = K^+.u$
  ○ si *max (u, v, 0)=v* alors $i_1 = K^+.v$
  ○ si *max (u, v, 0)=0* alors $i_1 = 0$

Les blocs constitués d'une part par le circuit 102 et les diodes $D_2$ et $D_5$, et d'autre part par le circuit 103 et les diodes $D_4$ et $D_6$, réalisent des fonctions qui s'en déduisent en permutant $u$, $v$ et $w$.

Pour les blocs correspondant aux circuits 104, 105 et 106, on inverse les signes de $u$, $v$ et $w$ et on change $K^+$ en $K^-$. En fait, $K^+$ et $K^-$ sont sensiblement égaux.

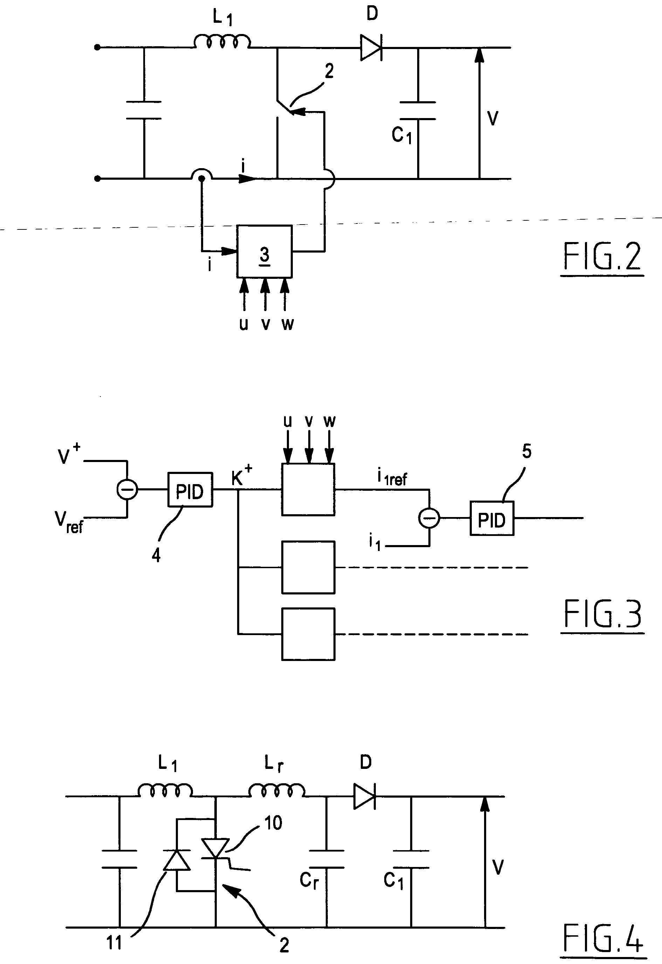

Les coefficients $K^+$ et $K^-$ sont réglés de manière à obtenir les valeurs recherchées pour $V^+$ et $V^-$ (valeurs de référence opposées). Par exemple, $K^+$ est obtenu en appliquant la grandeur $V^+ - V_{réf}$ à l'entrée d'un régulateur PID comme montré à la figure 3.

On voit à la figure 2 un convertisseur de type Boost susceptible d'être utilisé comme circuit 101-106. On connaît l'utilisation de tels convertisseurs dans les alimentations à découpage.

On voit sur la figure 2 le convertisseur Boost composé de façon connue d'une inductance série $L_1$, d'un interrupteur commandé 2 et d'un condensateur de sortie $C_1$. Une diode D est connectée en série avec l'inductance série $L_1$.

L'interrupteur 2 est commandé à l'aide d'un circuit de commande 3 décrit plus en détail en référence à la figure 3.

Le circuit 3 reçoit en entrée les tensions $u$, $v$ et $w$, la tension V ($V^+$ ou $V^-$ selon le cas) de sortie du circuit Boost, la tension de consigne $V_{ref}$ de sortie de ce même circuit, et le courant $i$ dans le circuit Boost..

Le circuit 3 soustrait V de $V_{ref}$ de manière à obtenir l'erreur sur la tension de sortie. Cette erreur en tension est appliquée à un régulateur PID (Proportionnel Intégral Dérivé) 4 dont la sortie est multipliée par $u$, $v$ ou $w$ de manière à former la consigne d'intensité $i_{ref}$ qui est donc constamment proportionnelle à $u$, de sorte que $i_{ref}$ est en phase avec $u$. Cette intensité $i_{ref}$ est soustraite de $i$ pour obtenir l'erreur en intensité qui est elle-même appliquée à un régulateur PID 5 dont la sortie commande l'interrupteur 2 par l'intermédiaire de circuits non représentés appropriés à ce type d'interrupteur.

La figure 4 représente une variante du circuit de la figure 2. Ce circuit comprend en premier lieu les mêmes composants que ceux de la figure 2, dans lesquels l'interrupteur commandé 2 est formé d'un thyristor 10 et d'une diode antiparallèle 11. Le circuit de commande du thyristor 10 (non représenté), est similaire au circuit de commande 3 de la figure 3 et comprend, en sortie du régulateur 5, un oscillateur contrôlé en tension 13 (VCO ou *Voltage controlled oscillator*) qui fournit les impulsions de commande du thyristor 10.

On voit également sur la figure 4 que le circuit Boost de cette figure comprend en outre un circuit résonnant $L_r$, $C_r$ disposé entre l'interrupteur 2 et la diode D de sorte que l'inductance $L_r$ soit en série avec l'inductance $L_1$ et que le condensateur $C_r$ soit connecté au point com-

mun à l'inductance $L_r$ et à la diode D. Ce circuit oscillant est utilisé pour garantir au thyristor un temps suffisant pour son ouverture pour un courant maximum $I_{L1max}$ dans l'inductance $L_1$.

En effet, la figure 5 montre les formes d'onde de l'intensité $I_{thyristor}$ dans le thyristor, de l'intensité $I_{diode}$ dans la diode D, et des intensités $I_{L1}$ et $I_{Lr}$ dans les inductances $L_1$ et $L_r$ respectivement. La figure illustre le fait que le courant $I_{Lr}$ dans l'inductance $L_r$ est égal à la différence entre le courant $I_{L1}$ (pratiquement constant à l'échelle du phénomène) dans l'inductance $L_1$ et le courant dans le thyristor (ou dans la diode D, selon le sens). Le temps $\tau$ de conduction de la diode D doit donc être supérieur au temps de recouvrement (de désamorçage) $t_q$ du thyristor, ce qui permet à l'homme de métier de dimensionner $L_r$ et $C_r$ en prenant $t_q=t_{qmax}$, valeur que prend le temps de recouvrement pour le courant $I_{L1}$ maximum.

On constate toutefois que, lorsque le courant d'entrée $I_{L1}$ est faible, le courant du circuit résonnant est surdimensionné et donc que le rendement est mauvais. On peut pallier cet inconvénient en utilisant pour l'inductance $L_r$ une inductance variable, par exemple une inductance saturable réalisée de façon connue à l'aide de deux transformateurs dont les enroulements primaires sont en série, et dont les enroulements secondaires sont en opposition.

On voit à la figure 6 le courant $i_1$, et on constate que $i_{1max}$ est égal à la moitié du courant d'entrée crête dans $u$, $v$ ou w. On a donc une puissance crête totale identique à celle que l'on obtiendrait avec trois circuits PFC monophasés de courant crête égal à deux fois $i_{max}$, que l'on ne saurait toutefois connecter directement en parallèle en sortie.

## Revendications

**1.** Dispositif de conversion d'énergie électrique d'une alimentation alternative triphasée vers une sortie continue, comprenant une première, une deuxième et une troisième phase d'entrée ; **caractérisé en ce que**

- la première phase est reliée, par l'intermédiaire d'une première diode (D1) connectée en sens direct, à l'entrée d'un premier circuit (101) de type Boost et, par l'intermédiaire d'une deuxième diode (D2) connectée en sens direct, à l'entrée d'un deuxième circuit (102) de type Boost ;
- la deuxième phase est reliée, par l'intermédiaire d'une troisième diode (D3) connectée en sens direct, à l'entrée du premier circuit de type Boost et, par l'intermédiaire d'une quatrième diode (D4) connectée en sens direct, à l'entrée d'un troisième circuit (103) de type Boost ;
- la troisième phase est reliée, par l'intermédiaire d'une cinquième diode (D5) connectée en sens direct, à l'entrée du deuxième circuit de type Boost et, par l'intermédiaire d'une sixième diode (D6) connectée en sens direct, à l'entrée du troisième circuit de type Boost ;

les sorties desdits premier, deuxième et troisième circuits de type Boost étant connectées à une borne (110) d'un premier condensateur de sortie (111) ; **en ce que**

- la première phase est reliée, par l'intermédiaire d'une septième diode (D7) connectée en sens inverse, à l'entrée d'un quatrième circuit (104) de type Boost et, par l'intermédiaire d'une huitième diode (D8) connectée en sens inverse, à l'entrée d'un cinquième circuit (105) de type Boost ;
- la deuxième phase est reliée, par l'intermédiaire d'une neuvième diode (D9) connectée en sens inverse, à l'entrée d'un sixième circuit (106) de type Boost et, par l'intermédiaire d'une dixième diode (D10) connectée en sens inverse, à l'entrée du cinquième circuit de type Boost ;
- la troisième phase est reliée, par l'intermédiaire d'une onzième diode (D11) connectée en sens inverse, à l'entrée du sixième circuit de type Boost et, par l'intermédiaire d'une douzième diode (D12) connectée en sens inverse, à l'entrée du quatrième circuit de type Boost ;

les sorties desdits quatrième, cinquième et sixième circuits de type Boost étant connectées à une borne (120) d'un deuxième condensateur de sortie (121) ; et **en ce que**
les autres bornes desdits premier et deuxième condensateurs de sortie sont reliées entre elles.

**2.** Dispositif selon la revendication 1, comprenant un point neutre d'entrée (N) connecté à la borne commune aux deux condensateurs de sortie.

**3.** Dispositif selon l'une quelconque des revendications 1 et 2, dans lequel au moins un desdits circuits de type Boost comporte un interrupteur (2) commandé par un circuit de commande, (3), un premier condensateur de sortie ($C_1$) et une première inductance série d'entrée ($L_1$) une diode (D) étant connectée en série avec ladite première inductance entre l'interrupteur commandé et le condensateur de sortie.

**4.** Dispositif selon la revendication 3, dans lequel ledit interrupteur commandé est un transistor.

**5.** Dispositif selon la revendication 3, dans lequel ledit interrupteur commandé est formé d'un thyristor (10) et d'une diode antiparallèle (11), des moyens étant prévus pour garantir l'annulation du courant dans le thyristor pendant un temps suffisant à l'ouverture de ce dernier.

6. Dispositif selon la revendication 5, dans lequel lesdits moyens d'annulation du courant comprennent un circuit résonnant ($L_r$, $C_r$) comportant une deuxième inductance série ($L_r$) connectée entre ladite première inductance série et la diode série, et un deuxième condensateur ($C_r$) connecté à la borne commune à ladite deuxième inductance série et à la diode série.

7. Dispositif selon la revendication 6, dans lequel ladite deuxième inductance série est une inductance variable.

8. Equipement électrique de puissance, **caractérisé en ce qu'**il comprend au moins un dispositif selon l'une quelconque des revendications 1 à 7.

**Patentansprüche**

1. Vorrichtung zur Umwandlung elektrischer Energie einer dreiphasigen Wechselspannungsversorgung in eine Gleichspannungsausgabe, die eine erste, eine zweite und eine dritte Eingangsphase aufweist; **dadurch gekennzeichnet, dass**

- die Primärphase über eine erste Diode (D1), die in Durchlassrichtung angeschlossen ist, mit dem Eingang einer ersten Schaltung (101) vom Aufwärtswandlertyp und über eine zweite Diode (D2), die in Durchflussrichtung angeschlossen ist, mit dem Eingang einer zweiten Schaltung (102) vom Aufwärtswandlertyp verbunden ist;
- die zweite Phase über eine dritte Diode (D3), die in Durchflussrichtung angeschlossen ist, mit dem Eingang der ersten Schaltung vom Aufwärtswandlertyp und über eine vierte Diode (D4), die in Durchflussrichtung angeschlossen ist, mit dem Eingang einer dritten Schaltung (103) vom Aufwärtswandlertyp verbunden ist;
- die dritte Phase über eine fünfte Diode (D5), die in Durchflussrichtung angeschlossen ist, mit dem Eingang der zweiten Schaltung vom Aufwärtswandlertyp und über eine sechste Diode (D6), die in Durchflussrichtung angeschlossen ist, mit dem Eingang der dritten Schaltung vom Aufwärtswandlertyp verbunden ist;

wobei die Ausgänge der ersten, zweiten und dritten Schaltung vom Aufwärtswandlertyp mit einem Anschluss (110) eines ersten Ausgangskondensators (111) verbunden ist;
dass

- die erste Phase über eine siebte Diode (D7), die in Sperrrichtung angeschlossen ist, mit dem Eingang einer vierten Schaltung (104) vom Aufwärtswandlertyp und über eine achte Diode (D8), die in Sperrrichtung angeschlossen ist, mit dem Eingang einer fünften Schaltung (105) vom Aufwärtswandlertyp verbunden ist;
- die zweite Phase über eine neunte Diode (D9), die in Sperrrichtung angeschlossen ist, mit dem Eingang einer siebten Schaltung (106) vom Aufwärtswandlertyp und über eine zehnte Diode (D10), die in Sperrrichtung angeschlossen ist, mit dem Eingang der fünften Schaltung vom Aufwärtswandlertyp verbunden ist;
- die dritte Phase über eine elfte Diode (D11), die in Sperrrichtung angeschlossen ist, mit dem Eingang der sechsten Schaltung vom Aufwärtswandlertyp und über eine zwölfte Diode (D12), die in Sperrrichtung angeschlossen ist, mit dem Eingang der vierten Schaltung vom Aufwärtswandlertyp verbunden ist;

wobei die Ausgänge der vierten, fünften und sechsten Schaltung vom Aufwärtswandlertyp mit einem Anschluss (120) eines zweiten Ausgangskondensators (121) verbunden sind;
und dass
die anderen Anschlüsse des ersten und des zweiten Ausgangskondendators miteinander verbunden sind.

2. Vorrichtung nach Anspruch 1, die einen Eingangsneutralpunkt (N) aufweist, der mit dem für die beiden Ausgangskondensatoren gemeinsamen Anschluss verbunden ist.

3. Vorrichtung nach einem beliebigen der Ansprüche 1 und 2, worin wenigstens eine der Schaltungen vom Aufwärtswandlertyp einen durch eine Steuerschaltung (3) gesteuerten Schalter (2), einen ersten Ausgangskondensator ($C_1$) und eine erste Eingangsreiheninduktivität ($L_1$) enthält, wobei eine Diode (D) in Reihe mit der ersten Induktivität zwischen dem gesteuerten Schalter und dem Ausgangskondensator angeschlossen ist.

4. Vorrichtung nach Anspruch 3, worin der gesteuerte Schalter ein Transistor ist.

5. Vorrichtung nach Anspruch 3, worin der gesteuerte Schalter durch einen Thyristor (10) und eine antiparallele Diode (11) gebildet ist, wobei Mittel vorgesehen sind, um die Aufhebung des Stroms in dem Thyristor für eine zum Öffnen des letzteren ausreichende Zeit sicherzustellen.

6. Vorrichtung nach Anspruch 5, worin die Mittel zur Aufhebung des Stroms eine Resonanzschaltung ($L_r$, $C_r$) aufweisen, die eine zweite Reiheninduktivität ($L_r$), die zwischen der ersten Reiheninduktivität und der Reihendiode angeschlossen ist, und einen zweiten Kondensator ($C_r$) enthält, der mit dem für die zweite Reiheninduktivität und die Reihendiode gemeinsamen Anschluss verbunden ist.

7. Vorrichtung nach Anspruch 6, worin die zweite Reiheninduktivität eine variable Induktivität ist.

8. Elektrische Leistungseinrichtung, **dadurch gekennzeichnet, dass** sie wenigstens eine Vorrichtung nach einem beliebigen Ansprüche 1-7 aufweist.

**Claims**

1. Device for converting electrical energy from an alternating three-phase supply to a continuous output, comprising a first, a second and a third input phase:

    **characterised in that**

    - the first phase is connected to the input of a first boost-type circuit (101) through a first diode (D1) connected in the forward direction, and to the input of a second boost-type circuit (102) through a second diode (D2) connected in the forward direction;
    - the second phase is connected to the input of the first boost-type circuit via a third diode (D3) connected in the forward direction, and to the input of a third boost-type circuit (103) through a fourth diode (D4) connected in the forward direction;
    - the third phase is connected to the input of the second boost-type circuit through a fifth diode (D5) connected in the forward direction, and to the input of the third boost-type circuit through a sixth diode (D6) connected in the forward direction;

    the outputs from said first, second and third boost-type circuits being connected to a terminal (110) of a first output capacitor (111);
    and **in that**

    - the first phase is connected to the input of a fourth boost-type circuit (104) through a seventh diode (D7) connected in the reverse direction, and to the input of a fifth boost-type circuit (105) through an eighth diode (D8) connected in the reverse direction,
    - the second phase is connected to the input of a sixth boost-type circuit (106) via a ninth diode (D9) connected in the reverse direction, and to the input of the fifth boost-type circuit through a tenth diode (D10) connected in the reverse direction,

    - the third phase is connected to the input of the sixth boost-type circuit through an eleventh diode (D11) connected in the reverse direction, and to the input of the fourth boost-type circuit through a twelfth diode (D12) connected in the reverse direction;

    the outputs from said fourth, fifth and sixth boost-type circuits being connected to a terminal (120) of a second output condenser (121);
    and **in that**
    the other terminals of said first and second output capacitor are connected together.

2. Device according to claim 1, comprising a neutral input point (N) connected to the common terminal of the two output capacitors.

3. Device according to any of claims 1 and 2, wherein at least one of said boost-type circuits comprises a switch (2) controlled by a control circuit (3), a first output capacitor ($C_1$) and a first series input inductance ($L_1$), a diode (D) being connected in series with said first inductance between the controlled switch and the output capacitor.

4. Device according to claim 3, wherein said controlled switch is a transistor.

5. Device according to claim 3, wherein said controlled switch is formed by a thyristor (10) and an anti-parallel diode (11), means being provided to guarantee cancellation of the current in the thyristor during a time sufficient for its opening.

6. Device according to claim 5, wherein said current cancellation means comprise a resonant circuit ($L_r$, $C_r$) comprising a second series inductance ($L_r$) connected between said first series inductance and the series diode, and a second capacitor ($C_r$) connected to the common terminal of said second series inductance and the series diode.

7. Device according to claim 6, wherein said second series inductance is a variable inductance.

8. Electrical power equipment, **characterised in that** it comprises at least one device according to any of claims 1 to 7.

FIG.1

FIG.2

FIG.3

FIG.4

I Thyristor

I L1

I L1

I Lr

I Lr

t ON

t

I Diode

FIG.5

W

u

v

w

i₁

120°    120°    60°

30°    30°

FIG.6